# EUROPEAN PATENT APPLICATION

(11) **EP 1 577 199 A1**
(43) Date of publication of application: **21.09.2005**
(21) Application number: 05005835.3
(22) Date of filing: 17.03.2005
(51) Int. Cl.: B62D 61/08, B62K 5/04, B62K 5/06

(54) **Portable mid-wheel drive scooter**

(30) Priority: 18.03.2004 US 803613
(71) Applicant: INVACARE CORPORATION, Elyria, OH 44036-2125 (US)
(72) Inventor: Fought, Gerald, Ohio 44028 (US); Goertzen, Gerald, Ohio 44212 (US); Huhndorff, Harry, Ohio 44140 (US); Jindra, John, Ohio (US); Richey, Joseph B. II, Ohio 44022 (US)
(74) Representative: Burrows, Anthony Gregory

(57) **Abstract**

A scooter has at least two drive wheels (610,612) which are placed in alignment with or forward of a location on the scooter defined by the approximate location of the head and shoulders of a user of the scooter. The scooter may optionally have a plurality of pivot arms (614,616) and pivot arm castors (618,620) extending rearward of the frame (604) of the scooter for facilitating rearward stability of the scooter. The scooter may be powered by one or more motors (622) coupled to one or more of the wheels (610,612). The scooter may also be easily disassembled by detaching the front portion (605a) of the scooter from the rear portion (605b) of the scooter.

## Description

The invention relates generally to conveyances and, more particularly, to motorized conveyances such as scooters and the like having mid-wheel drives with rearward stability and scooters having all wheel steering systems.

Scooters are an important means of transportation for a significant portion of society. They provide an important degree of independence for those they assist. However, this degree of independence can be limited if scooters are required to navigate small hallways or make turns in tight places such as, for example, when turning into a doorway of a narrow hallway. This is because most scooters have a three-wheel configuration that creates a less than ideal minimum turning radius for the scooter. Such three wheel configuration typically has a front steering wheel and two rear drive wheels. As such, the two rear drive wheels propel the scooter forward or rearward, while the front steering wheel steers the scooter by rotating through a plurality of steering angles. Alternative configurations include a front drive and steering wheel and two rear wheels. Because the steering wheel is typically located in the front portion of the scooter and the other wheels are typically located in the rear portion of the scooter, the scooter's turning radius is directly dependent on the physical dimensions that separate these components. As such, the minimum turning radius formed by such a three wheel configuration, while adequate for most purposes, is too large for simple navigation of the scooter in tight spaces such as in narrow doorways and hallways. Hence, a need exists for a scooter that does not suffer from the aforementioned drawbacks.

These and other deficiencies of the prior art can be overcome by the present invention, the exemplary embodiment of which provides a scooter having at least two drive wheels placed in alignment with or forward to the approximate location of the scooter's user's head and shoulders is provided. A plurality of pivot arms is optionally provided to augment rearward stability.

According to another embodiment of the present invention, a scooter having at least two drive wheels placed in alignment with or forward to a connection point between the drive wheels and the frame of the scooter is provided. A plurality of suspensions for augmenting rearward stability are provided, including pivots arms and leaf springs.

According to yet another embodiment of the present invention, a scooter having at least two drive wheels placed in alignment with or forward to a scooter user's center of gravity is provided. A multi-bar link system is optionally provided to augment rearward stability. Another embodiment of the mid-wheel version of the scooter of the present invention includes a means for quickly and easily detaching the front portion of the scooter from the rear portion of the scooter so that the entire unit may be easily transported.

An advantage of the present invention is to provide a more maneuverable personal assist vehicle such as a scooter and the like having a mid-wheel drive configuration. An additional advantage of the present invention is to provide increased rearward stability to a mid-wheel drive scooter configuration.

Still further advantages of the present invention will become apparent to those of ordinary skill in the art upon reading and understanding the following detailed description of the preferred embodiments.

In order that the invention may be clearly and completely disclosed, reference will now be made, by way of example, to the accompanying drawings, in which :-
FIG. 1 is an exemplary perspective view of an all-wheel steering scooter in accordance with one embodiment of the present invention.
FIG. 2 is an exemplary side elevational view of an all-wheel steering scooter in accordance with one embodiment of the present invention.
FIGS. 3A-B are exemplary schematic diagrams of a steering mechanism in accordance with one embodiment of the present invention. FIG. 3C is an exemplary diagram of a scooter in accordance with one embodiment of the present invention. FIG. 3D is an exemplary schematic diagram of a steering mechanism for a scooter in accordance with one embodiment of the present invention.
FIGS. 4A-B are exemplary schematic diagrams of a steering mechanism for a scooter in accordance with one embodiment of the present invention.
FIGS. 5A-5B are exemplary schematic diagrams of a steering mechanism for a scooter in accordance with one embodiment of the present invention. FIG. 5C is an exemplary diagram of a scooter in accordance with one embodiment of the present invention.
FIGS. 6A-C and 10A-F are exemplary perspective and partial views of a mid-wheel drive vehicle in accordance with one embodiment of the present invention.
FIGS. 6D-F are exemplary partial views of a drive mechanism of a mid-wheel drive vehicle in accordance with one embodiment of the present invention.
FIGS. 7A-C are exemplary partial views of a mid-wheel drive vehicle in accordance with one embodiment of the present invention.
FIG. 8 is an exemplary schematic illustration of a mid-wheel drive vehicle in accordance with one embodiment of the present invention.
FIG. 9 is an exemplary schematic drawing of a comparison between a rear-wheel scooter and a mid-wheel drive vehicle in accordance with one embodiment of the present invention.
FIG. 11 is a perspective view of an embodiment of the present invention that includes the mid-wheel drive feature and that may be separated into several parts.
FIG. 12 is a top view of the scooter of FIG. 11 showing the appearance of the scooter with the protective shroud and seat removed.
FIG. 13 is a side view of the scooter of FIG. 11 showing the appearance of the scooter with the protective shroud and seat removed.
FIG. 14 is a top view of the scooter of FIG. 11 showing the front portion of the scooter separated from the rear portion of the scooter.
FIG. 15 is a rear perspective view of the scooter of FIG. 11 showing the front portion of the scooter separated from the rear portion of the scooter.
FIG. 16A-C are side views of the attachment and locking mechanism of the scooter of FIG. 11.

Generally, a scooter is a vehicle used to assist those having an impaired ability to transport themselves. In an embodiment, a scooter of the present invention has one or more wheels including at least one front wheel and two rear wheels. The front or rear wheels can be drive wheels. At least one motor (also called a drive mechanism) or combination motor/gear box is provided to drive the drive wheels. The motor is typically controlled by an electronic controller connected to one or more user control devices. The user control devices generally provide selection of forward and reverse movement of the vehicle, as well as controlling the velocity or speed. A battery typically supplies the controller and drive motors with an energy supply. Dynamic braking and an automatic park brake are also incorporated into the scooter. The dynamic brake allows the operator to proceed safely, even down a slope. Further, the park brake automatically engages to hold the vehicle in place when the vehicle is standing still.

The present invention provides multiple embodiments of scooters. One embodiment is an all-wheel steering scooter and another embodiment is a mid-wheel drive scooter. In an embodiment relating to mid-wheel drive scooters, a scooter has a forward steering wheel and two drive wheels located rearward of the steering wheel and, most preferably, somewhere proximate a ranging center portion of the scooter between the steering wheel and the rear portion of the scooter. More specifically, the mid-wheel drive wheels are positioned on the scooter frame so as to be in vertical alignment with a user's head and shoulders. The scooter further includes a suspension for providing rearward stability for the scooter when the drive wheels are located forward of the rearward most portion of the scooter.

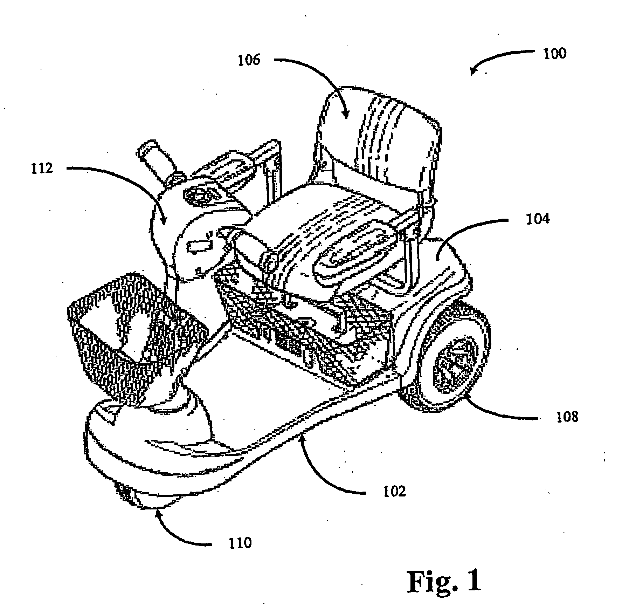

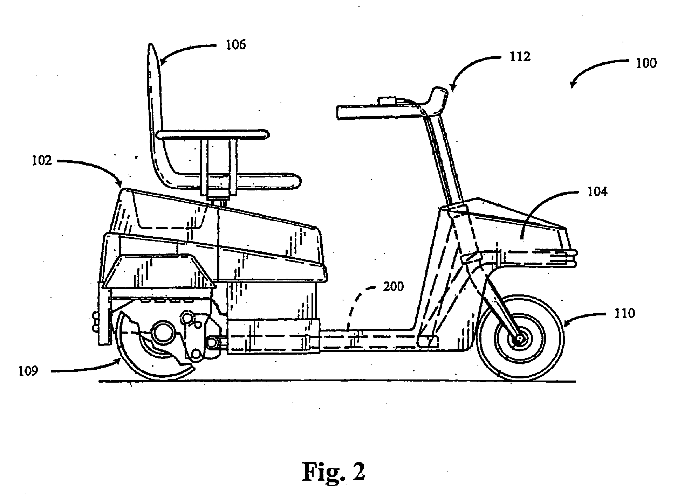

Referring now to FIGS. 1 and 2, an embodiment of an all-wheel steering scooter 100 is illustrated. The scooter 100 has body or frame 102 that is typically covered by a decorative shroud 104. The scooter 100 also includes a seat 106, drive wheels 108 and 109 (FIG. 2), and forward steering wheel 110. The drive wheels can be linked to one or more electric motors (not shown) or electric motor/gear box combinations. Forward steering wheel 110 is physically linked to steering column 112. Steering column 112 further has steering handles, an instrumentation display, and a user input control device such as, for example, a throttle or the like.

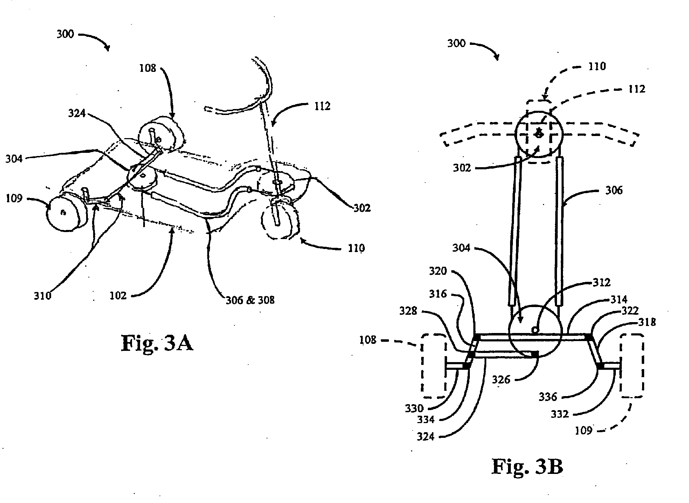

Illustrated in FIGS. 3A and 3B are schematic diagrams illustrating one embodiment of an all-wheel steering mechanism 300 suitable for scooter 100. In this regard, steering mechanism 300 has pulleys 302 and 304 interconnected together by a flex cable 306. A sheath 308 is provided to protect the flex cable 308. Pulley 302 is connected to steering column 112 such that any rotation or angular movement of steering column 112 causes pulley 302 to also undergo rotation or angular movement.

Pulley 304 is connected to a pin or bearing assembly 312 and a plurality of Ackermann linkages generally indicated at 310. Pin or bearing assembly 312 is secured to the body 102 of the scooter 100 and allows pulley 304 to freely rotate. Pulley 304 is further connected to linkages 310 via rod 324.

Linkages 310 include rod 324, first angular linkage 316, second angular linkage 318, and tie linkage 314. Rod 324 has a first pivotal attachment 326 a radial distance away from the center of pulley 304 and a second pivotal attachment 328 to first angular linkage 316. First and second angular linkages 316 and 318 are each attached to tie linkage 314 via pivotal attachments 320 and 322, respectively. First and second angular linkages 316 and 318 each include a pivotal connection 334 and 336 to the frame or body 102 of the scooter and an angled extension portions 330 and 332, respectively. Angled extension portions 330 and 332 are coupled to the drive wheels. Being fixed to the frame or body 102, pivotal connections 334 and 336 do not physically move but allow first and second angular linkages 316 and 318 to rotate or pivot there around. The pivotal connections as used herein can range from a simple hinge joint, such as pin or bolt extending through apertures formed in the relative rotational bodies or linkages, or a bearing assembly provided between and connected to the rotating bodies or linkages. Other joints allowing for rotation movement can also be applied.

In operation, rotation of steering column 112 causes pulley 302 to rotate. Rotation of pulley 302 causes flex cable 306 to cause rotation of pulley 304. Rotation of pulley 304 causes rod 324 to undergo lateral displacement. Lateral displacement of rod 324 causes first angular linkage 316 to pivot about pivot connection 334. This causes drive wheel 108 to undergo angular displacement. Because first angular linkage 316 is also connected to second angular linkage 318 by tie linkage 314, second angular linkage 318 also rotates or pivots around its pivotal connection 336. This in turn causes drive wheel 109 to undergo angular displacement. When turning, the scooter of the present invention is configured to allow a speed differential to develop between the two drive wheels. This speed differential is necessary because each drive wheel is a different distance from the turning point of the scooter, the turning point being the center of the curvature of the scooter's turn. This speed differential can be provided by mechanically such as, for example, by a transaxle, or electrically such as, for example, by a parallel or series wiring of the power drive signal to the drive motors or by control directly within the electronic controller controlling the power distribution to the scooter's drive motors.

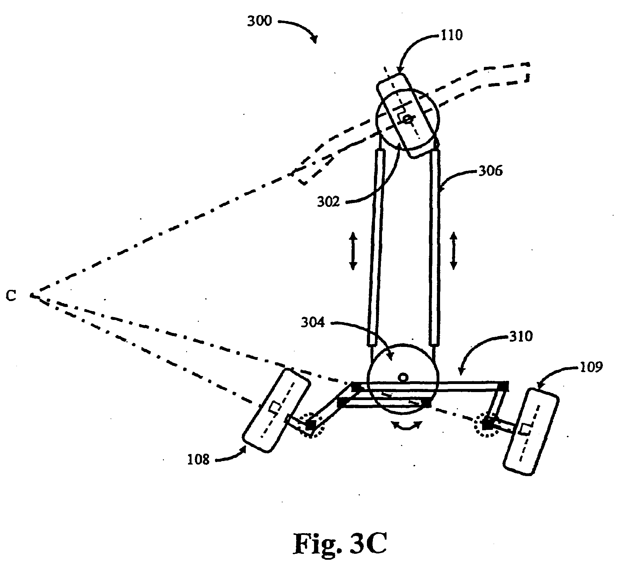

As shown in FIG. 3C, the angular displacement of steering wheel 110 causes drive wheels 108 and 109 to undergo a corresponding change in angular position. This change in angular position is configured to be opposite in direction from the steering wheel's change in angular position. Additionally, since drive wheels 108 and 109 are different distances from a turning point C of the scooter, each drive wheel's angular displacement is preferably configured to be 90 degrees from a line running through the turning point C and the drive wheel's point of contact with the drive surface. Hence, for a particular turning point C, the angular displacement of each drive wheel 108 and 109 will be different. This difference is primarily provided by appropriately configuring the angular configuration of first and second angular linkages 316 and 318.

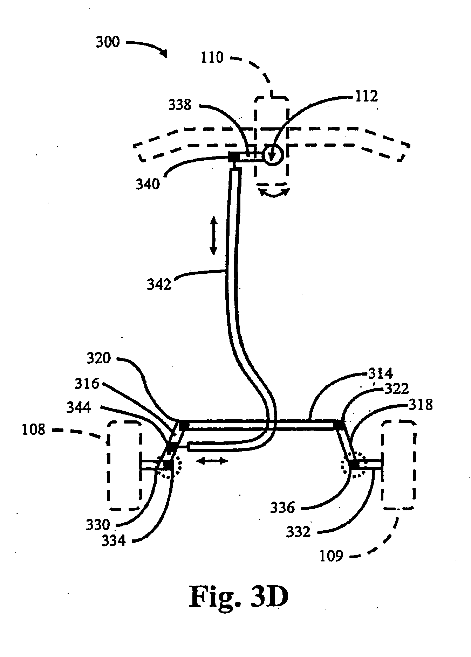

FIG. 3D illustrates another embodiment that employs a push-pull cable 342. Push-pull cable 342 is any suitable mechanical push-pull cable or wire rope such as manufactured by, for example, Cable Manufacturing and Assembly Co., Inc. of Bolivar, Ohio. The push-pull cable 342 preferably comprises an outer conduit having a multi-strand wound cable or solid core. The cable or core can move within the conduit and thereby translate linear motion input at one end of the cable or core to the other. In this regard, the cable or core of push-pull cable 342 has a first end preferably connected to steering column 112 via linkage 338. Linkage 338 is rigidly affixed to steering column 112 so as to rotate therewith. The connection of push-pull cable 342 to linkage 338 is accomplished by any suitable joint, including but not limited to, a pivot joint such as, for example, by a bolt, screw or rivet extending through an "eye" fitting attached to one end of the cable or core of push-pull cable 342 and an corresponding aperture in linkage 338. Since push-pull cable 342 is flexible, it can be curved or bent to translate the reciprocating movement experienced by its connection to steering column 112 to linkages 314, 316, and 318, as illustrated. In this regard, a second end of push-pull cable 342 is connected to linkage 316 via connection 344. Connection 344 can also be via a bolt, screw or rivet extending through an "eye" fitting on the second end of cable or core of push-pull cable 342 and a corresponding aperture in linkage 316. Other suitable connections are also possible.

In operation, the rotational movement of steering column 112 causes linkage 338 to undergo rotation movement thereabout. This causes the first end of the cable or core of push-pull cable 342 to undergo linear movement that is translated to linkage 316. Because push-pull cable 342 is flexible, it can be arranged so as to cause pivotal movement of linkage 316 about its pivotal connection 334. This motion is translated by linkage 314 to linkage 318 as described earlier and results in wheels 108 and 109 pivoting to prescribed steering angles.

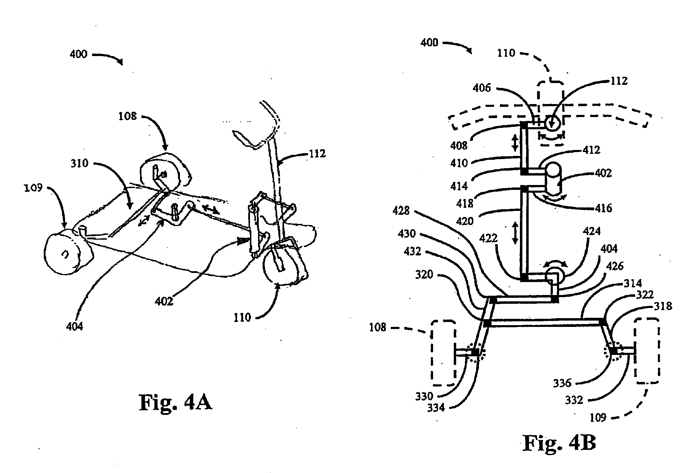

FIGS. 4A and 4B illustrate another embodiment 400 having a torque tube 402 and a bell crank 404. More specifically, embodiment 400 has steering column 112 linked to torque tube 402 via linkages 406, 410, and 412. Linkage 406 has a fist end attached to steering column 112 and a second end attached to linkage 410 via a pivotal connection 408. Linkage 410 is further connected to linkage 412 via pivotal connection 414. Linkage 412 is connected to a first distal portion of torque tube 402. Torque tube 402 includes a second distal portion that is attached to a projecting linkage 416. Torque tube 402 is fixedly attached to the frame or body 102 of the scooter so as to not undergo any lateral or longitudinal displacement, but to allow pivotal movement of linkages 412 and 416. Linkage 416 is connected to bell crank 404 via tie linkage 420 and pivotal connections 418 and 422. Bell crank 404 has a pivotal connection 424 to the frame or body 102 of the scooter. This keeps bell crank 404 in place while also allowing it to rotate around pivotal connection 424. Bell crank 404 further has a pivotal connection 426 to rod 428. Rod 428 connects bell crank 404 to linkages 310. In this embodiment, first angular linkage 432 is configured slightly different from first angular linkage 316 of FIG. 3B. More specifically, first angular linkage 432 has a pivotal connection 430 to rod 428 and pivotal connection 320 to tie linkage 314. In this regard, pivotal connection 320 to tie linkage 314 is shown in a middle portion of first angular linkage 432 between the pivotal connections 430 and 334. However, it is also possible to configure first angular linkage 432 to be the same as first angular linkage 314 (not shown). The remaining linkages and their pivotal connections are essentially the same as described in the embodiment of FIG. 3B.

In operation, rotation of steering column 112 causes linkage 406 to rotate. Rotation of linkage 406 causes longitudinal movement on linkage 410, which causes angular displacement of linkage 412 about torque tube 402. Torque tube 402 translates along a vertical height dimension the angular displacement of linkage 412 to a corresponding angular displacement of linkage 416. This angular displacement of linkage 416 translates to a longitudinal movement of tie linkage 420. The longitudinal movement of tie linkage 420 causes bell crank 404 to undergo pivotal movement about pivotal connection 424. This pivotal movement causes rod 428 to undergo lateral displacement that causes first angular linkage 432 to pivot about pivot connection 334. This causes drive wheel 108 to undergo angular displacement. Because first angular linkage 432 is also connected to second angular linkage 318 by tie linkage 314, second angular linkage 318 correspondingly rotates or pivots around its pivotal connection 336. This in turn causes drive wheel 109 to undergo angular displacement. The torque tube 402 allows the rotational movement of steering column 112 to be input above the vehicle's frame and to translate this motion to linkages under the frame.

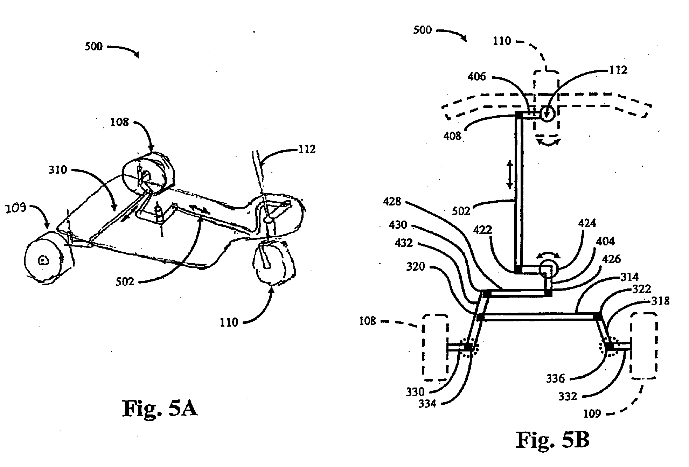

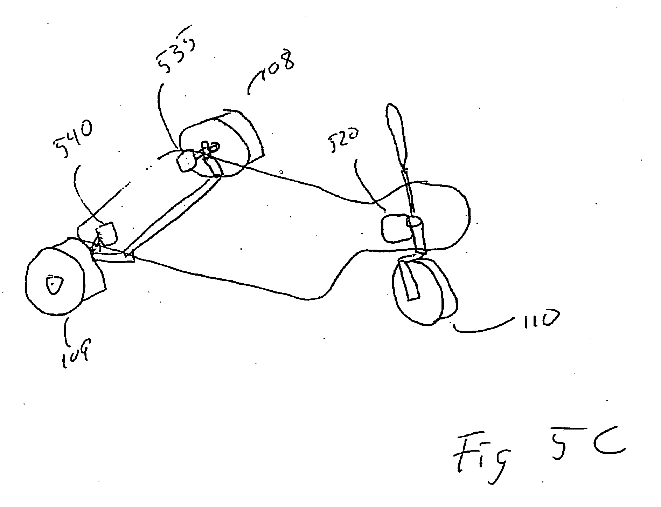

Illustrated in FIGS. 5A and 5B is another embodiment 500 that eliminates the torque tube 402, linkages 410, 412, 416, 420 and their associated pivotal connections of FIGS. 4A and 4B. In this regard, a single tie linkage 502 is provided between linkage 406 and bell crank 404. Tie linkage 502 has a pivotal connection 408 to linkage 406 and a pivotal connection 422 to bell crank 404. In operation, the pivotal movement of linkage 406 translates to longitudinal movement of tie linkage 502. The longitudinal movement of tie linkage 502 translates to rotational or pivotal movement of bell crank 404. The rotational or pivotal movement of bell crank 404 is translated to rotation or angular displacement of drive wheels 108 and 109, as already described above. The embodiment of FIGS. 5A and 5B allow for all of the linkages to be placed beneath the vehicle frame.

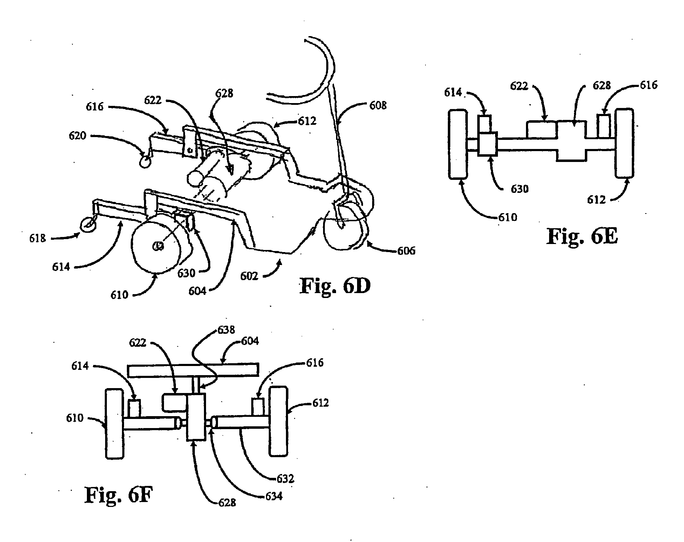

Illustrated in FIG. 5C is an embodiment illustrating drive mechanisms of a scooter of the present invention. As illustrated, a drive mechanism 520 may be connected to front wheel 110 to facilitate front wheel drive of the scooter. Alternatively and/or additionally, drive mechanisms 535 and 540 may be connected to rear wheels 108 and 109 to provide either rear-wheel drive or all-wheel drive of the scooter. Drive mechanisms may be connected to a corresponding drive wheel in any suitable manner. For example, drive mechanisms 535 and 540 may be rigidly connected to rear wheels 108 and 109 or may be pivotally connected by, for example, a universal joint. Alternatively, rear-wheel drive can be effectuated by using a single drive mechanism for the rear wheels, as illustrated with respect to FIGS. 6E and 6F herein.

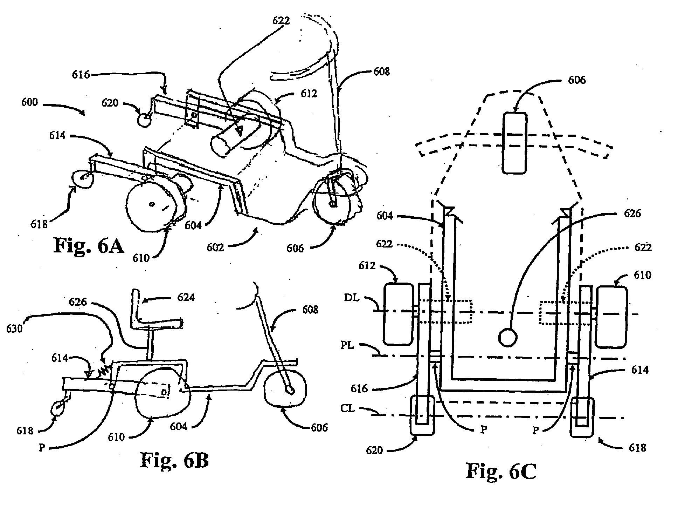

Referring now to FIGS. 6A, 6B, and 6C, the second general embodiment of the present invention will now be discussed. In particular, FIG. 6A illustrates a mid-wheel drive scooter 600 having a body 602, frame 604, front steering wheel 606, steering column 608, mid-wheel drive wheels 610 and 612, motor or a motor/gearbox 622 for each drive wheel, walking beams or pivot arms 614 and 616, and casters 618 and 620. As further illustrated in FIG. 6B, scooter 600 has a chair 624 mounted to a post 626. The post 626 is further mounted to the frame 604. Also, as further illustrated in FIG. 6B, walking beam or pivot arm 614 is connected to frame 604 at a pivotal connection P. Walking beam or pivot arm 616 is similarly connected to frame 604 via a similar pivotal connection.

Pivotal connection P may be laterally offset on frame 604 behind the seat post 626. The pivotal connection P between walking beam or pivot arm 614 and scooter frame 604 can be formed by any appropriate means including a pivot bolt or pin extending between brackets mounted on the frame 604 and apertures located in the walking beam or pivot arm 614. Other suitable pivotal joints can also be formed at pivotal connection P.

Walking beams or pivot arms 614 and 616 preferably have a caster wheel (e.g., 618, 620) located proximate a first distal end and a motor/drive wheel assembly (e.g., 610 and 622) mounted proximate a second opposite distal end. In between the first and second distal ends, apertures are provided in the walking beams or pivot arms that facilitate connection to the frame 604 to form pivotal connection P. The precise location of the apertures and pivotal connection P defines the weight distribution between the caster and drive wheel on the walking beam or pivot arm.

Referring now to FIG. 6C, a planar top view of the relative positioning of drive wheels 610 and 612, walking beams or pivot arms 614 and 616, casters 618 and 620, and seat post 626 are illustrated. In this regard, it can be seen that walking beams or pivot arms 614 and 616 are located adjacent to the lateral sides of frame 604. Line PL represents a line drawn through the pivotal connection P of each walking beam or pivot arm to frame 604. Line CL represents a line drawn through the connection of casters 618 and 622 to walking beams or pivot arms 614 and 616. Line DL represents a line drawn through the connection of drive wheels 610 and 612 to walking beams or pivot arms 614 and 616. In this embodiment, it can be seen that seat post 626 is located between drive wheel reference line DL and pivot point reference line PL. Most preferably, seat post 626 is located on frame 604 such that a user's head and shoulders are located approximately along drive wheel reference line DL when the user is seated in seat 624. It should be understood that relative positioning the drive wheels, pivotal connection P, rear casters and seat post can be adjusted on frame 604 to obtain optimum results according to the above user position requirement.

In summary, the walking beam or pivot arm distributes the scooter's and user's weight between the rear caster and the drive wheel. The walking beam or pivot arm supports the scooter frame behind the seat providing stability so the scooter doesn't tip rearward. As shown in FIG. 6B, an optional spring 630 may be placed between the frame 604 and the walking beams or pivotal arms to further increase rearward stability. In addition to providing rearward stability, the walking beam or pivot arm positions the drive wheel forward of the rear portion of the scooter's frame for improved maneuverability.

Illustrated in FIG. 6D is a scooter embodiment similar to FIGS. 6A-6C, except that the drive wheels 610 and 612 are driven by a single motor 622 and a transaxle 628. An axle joint 630 is provided for connecting transaxle 628 to drive wheel 610. In this regard, motor 622 is connected to transaxle 628 and the combination thereof is used to impart rotational motion to drive wheels 610 and 612. As described earlier, a gear box can also be present between motors 622 and transaxle 628. In this regard, transaxle 628 is configured to drive both drive wheels 610 and 612 at the same speed, as well as allowing a speed differential for each drive wheel when the vehicle is driving through a turn. Such transaxle assemblies can also include integrated motor and brake combinations as well.

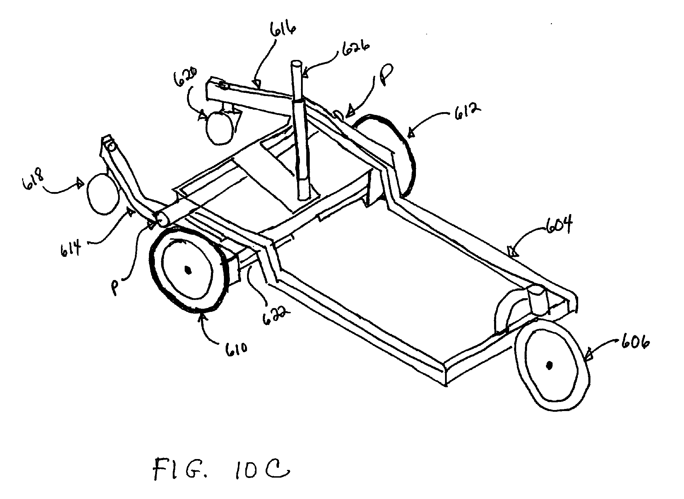

FIG. 6E illustrates a partial elevational view illustrating the motor 622, transaxle 628, walking beams or pivot arms 614 and 616, axle joint 630, and drive wheels 610 and 612. FIG. 6F illustrates a partial elevational view of a transaxle system that incorporates universal joints and drive axles having a suspension systems. More specifically, transaxle 628 and motor 622 are rigidly mounted to frame 604 via bracket 638. A universal joint 634 connects drive axle 632 to transaxle 628. Drive wheel 610 is similarly connected to transaxle 628. Hence, an independent suspension for the drive wheels is provided. FIGS. 10A-10F illustrate further aspects of the embodiment shown in FIGS. 6A-6C.

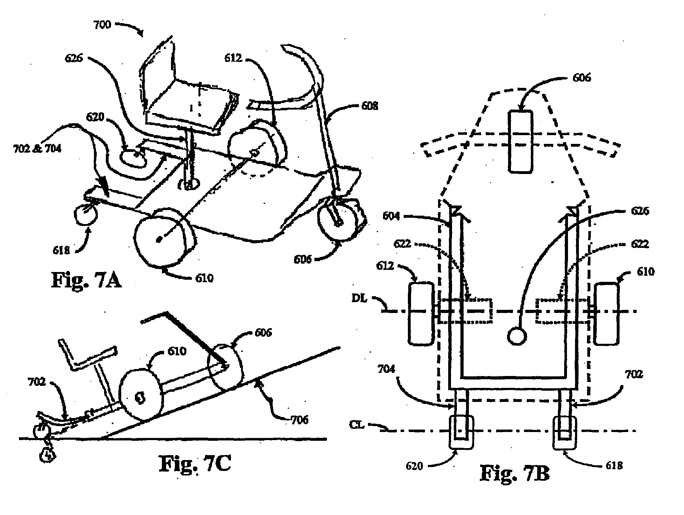

Referring now to FIGS. 7A, 7B, and 7C, a scooter embodiment 700 having spring-loaded rear casters is shown. The spring-loaded casters prevent the scooter from tipping rearward and flex to allow the scooter to go over bumps and up ramps such as, for example, ramp 706. In particular, scooter 700 is similar to scooter 600 of FIGS. 6A-6D, except that drive wheels 610 and 612 and their associated motors 622 are mounted directly to frame 604 and rear casters 618 and 620 are mounted to composite leaf springs 702 and 704 instead of walking beams or pivot arms. The composite leaf springs 702 and 704 are preferably made from a flexible composite material such as, for example, fiberglass and resin or other suitable composite materials or plastics. Alternatively, composite leaf springs 702 and 704 can be made from a material such as, for example, stainless steel, spring steel or other suitable metals or metal alloys.

As such, composite leaf springs 702 and 704 have first and second distal ends. The first distal end is preferably connected to a wheel or a caster such as, for example, castor 618. The second distal end is preferably connected to the frame 604. The second distal end's connection to frame 604 is preferably to a rear portion thereof that may or may not be the rearward most portion of frame 604. The connection may be by any suitable means including bolting, bracketing or clamping. The remaining aspects of the embodiment shown in FIGS. 7A-7C are similar to the embodiment illustrated and described in connection with FIGS. 6A-6D.

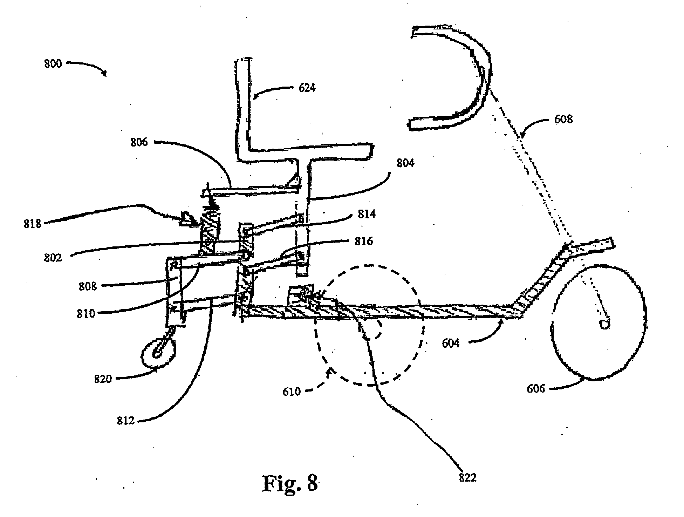

Illustrated in FIG. 8 is a scooter embodiment 800 having one or more weight-loaded casters, such as caster 820. In this embodiment, seat 624 and the rear caster or casters 820 are mounted to the frame 604 on separate four-bar link systems. When a user sits on the seat 624, a portion of the user's weight is applied to the casters through a laterally projecting tab 806 and caster spring 818. The amount of weight transferred to the caster(s) is dependent upon the strength of the spring 818. A strong spring will transfer more weight than a weak spring.

As described above, seat 624 is linked to frame 604 by seat post 804 and a four-bar link system having two upper links 814 and two lower links 816. Since FIG. 8 is a side elevational view of the scooter, only one upper link 814 and one lower link 816 are visible. An opposite side elevational view of the scooter would reveal a second pair of identical upper and lower links. In this regard, upper and lower links 814 and 816 each have first and second distal ends. The first distal ends of the upper and lower links have a first pivotal connection to seat post 804. The second distal ends of the upper and lower links have a second pivotal connection to frame post 802. The pivotal connections can be as described earlier for the walking beams or pivot arms.

Rear caster(s) 820 are connected to frame 604 via a caster post 808 and a second four-bar link system having upper and lower links 810 and 812. As described earlier, only one upper and one lower link 810 and 812 are shown in this side elevational view, with an identical second pair visible in an opposite side elevation view of the scooter (not shown). As such, upper and lower links 810 and 812 each have first and second distal ends. The first distal ends of the upper and lower links have a first pivotal connection to caster post 808. The second distal ends of the upper and lower links have a second pivotal connection to frame post 802. As described above, these pivotal connections can be according to any of the aforementioned pivotal structures.

Castor spring 818 also has first and second distal ends. At least one of the first and second distal ends is in physical communication with either tab 806 or link 810 when no user is seated in seat 624. Alternatively, the first distal end can be in physical communication with tab 806 and of the second distal end can be in a physical communication with link 810 when no user is seated in seat 644.

In operation, a user sits in seat 624 thereby causing a downward force to be applied to seat 624. This downward force is translated through tab 806, caster spring 818, and upper link 810 to caster post 808. Configured as such, tab 806, caster spring 818 and upper link 810 maintain a downward force on caster(s) 820. Since caster spring 818 is somewhat resilient, caster(s) 820 are allowed limited upward movement such as, for example, when traversing a bump or obstacle or when scooter 800 is climbing up a ramp (see FIG. 7C). An option seat spring 822 can be provided to cushion seat post 804 against frame 604.

The four-bar linkages associated with the seat post 804 and caster post 808 are advantageous because they always maintain seat post 804 and caster post 808 in a relatively vertical orientation while seat post 804 and caster post 808 undergo vertical movement. This configuration is especially advantageous because it selectively engages the caster spring 818 only when a force is applied to seat 624. Once the force has been removed from seat 624, caster 820 is no longer urged downwards. This configuration prevents the force of spring castor 818, if too strongly constituted, from lifting wheels 610 and 612 from the driving surface when there is no force applied to seat 624. Such a configuration also provides a mid-wheel drive scooter with variable rearward stability.

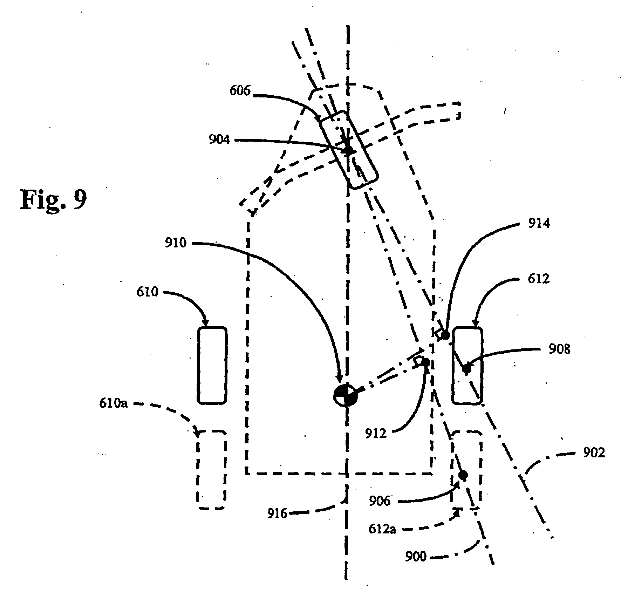

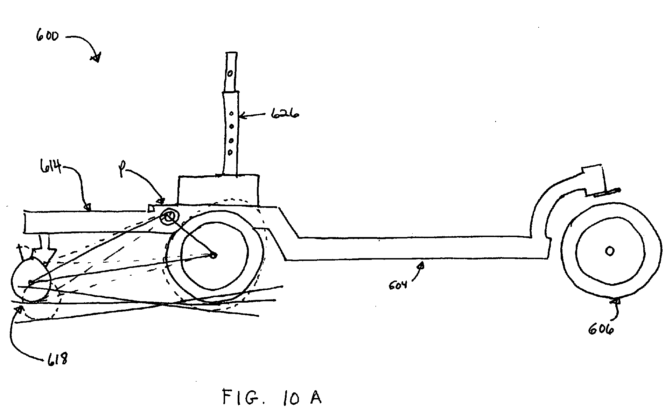

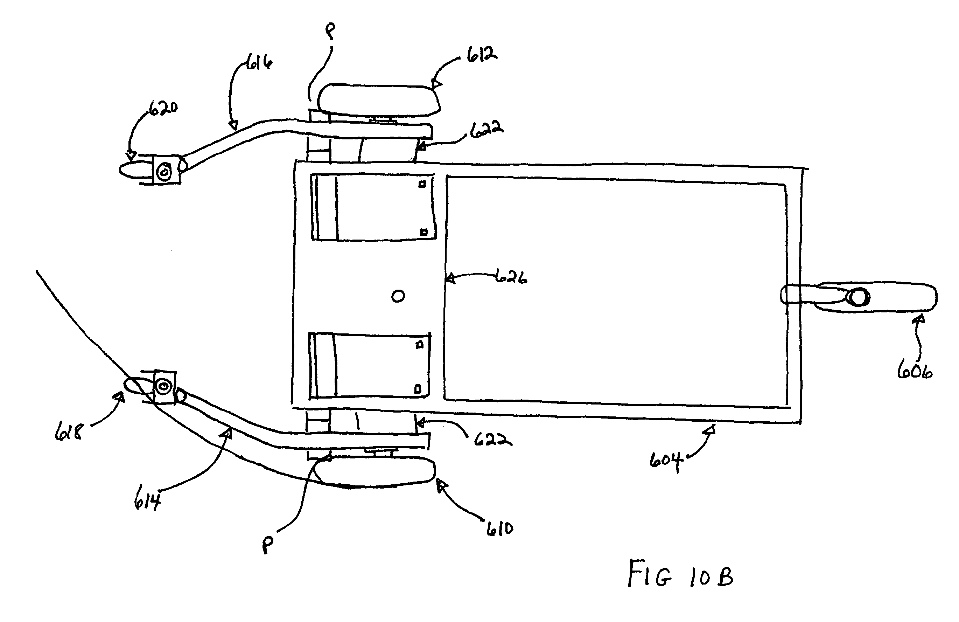

Referring now to FIG. 9, a diagram illustrating the increased side stability of a mid-wheel drive scooter compared to a conventional rear wheel drive scooter is shown. More specifically, steering wheel 606, mid-wheel drive wheels 610 and 612, and user center of gravity 910 are illustrated in their respective relative positions. Also illustrated are the relative positions of conventional rear wheel drive wheels 610a and 612a. Using the center of gravity 910 and riding surface contact points 904, 906, and 908 of the steering and drive wheels, respectively, a mid-wheel tilt line 902 and rear wheel tilt line 900 can be generated. As can be seen, mid-wheel tilt line 902 has a center of gravity tilt reference 914 that is further from the scooter's center line 916 than rear wheel tilt line 900 center of gravity tilt reference 912. The further the center of gravity reference is from scooter center line 916, the more the stable the scooter is with respect to side tilt. For example, when the scooter of FIG. 9 makes a left-hand turn, as the turning speed increases, the rear wheel drive configuration scooter will tend to tilt to the right at a lesser speed than the mid-wheel drive scooter of the present invention. This is important because tipping or tilting of a scooter can cause serious injury both to the user and bystanders.

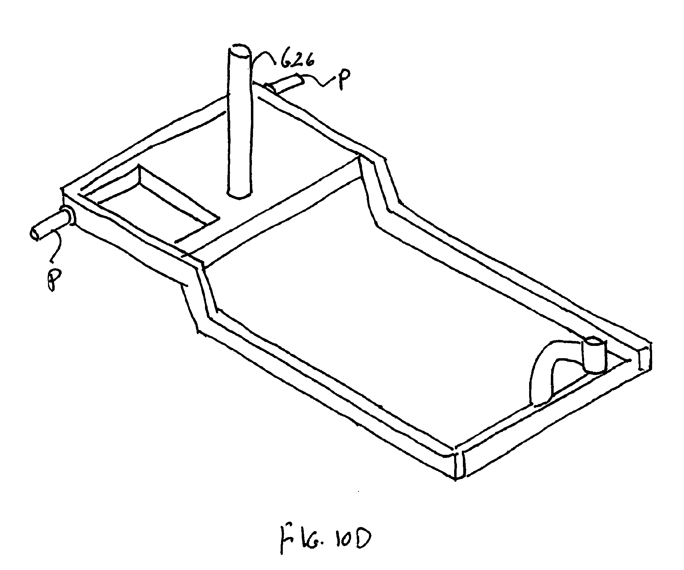

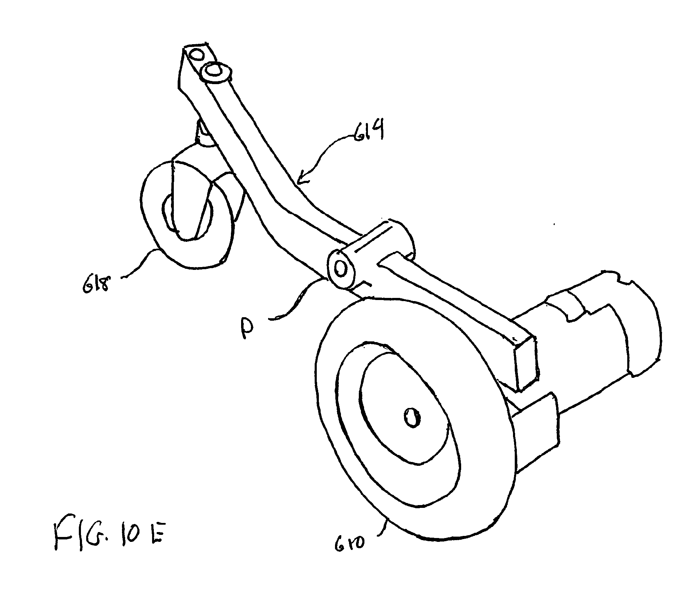

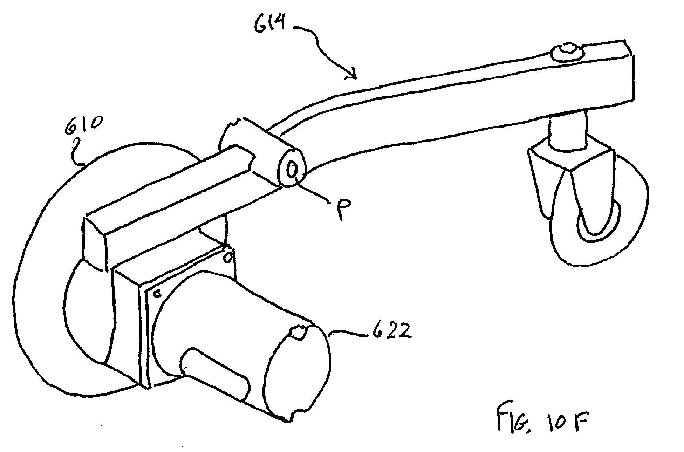

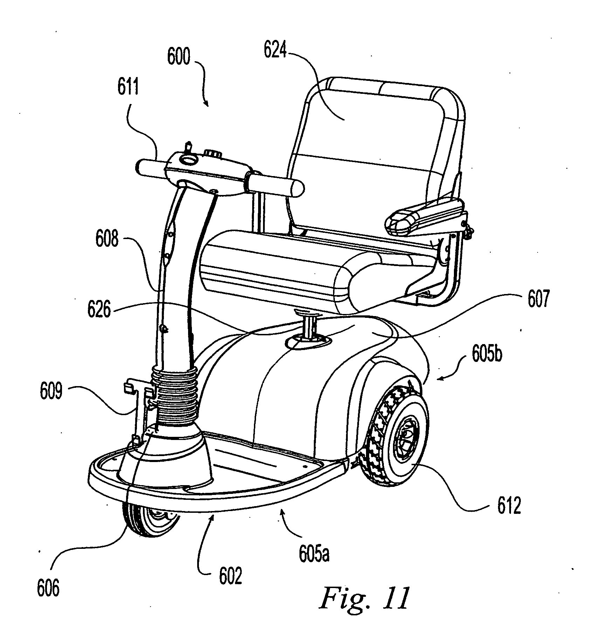

With reference now to FIGS. 11-15, another embodiment of scooter 600 includes the additional feature of a front portion 605a that is detachable from the rear portion 605b of the scooter. These detachable portions provide the user of the device with a means for separating an assembled scooter into multiple sections that are lighter and easier to lift. As best shown in the exemplary embodiment of FIG. 11, front portion 605a of the assembled scooter includes a body 602 that is surrounded by a supportive frame 604. Front steering wheel 606 is located directly beneath steering column 608 and is controlled by manipulating steering means 611. Steering column 608 may be folded downward toward the body for storage purposes. Basket support 609 is a clip-like device mounted on the front portion of the steering column. Tray 603 is located behind the main body portion where the user places his or her feet and serves as a supportive platform for the batteries that typically power the electric version of scooter 600. Protective shroud 607 covers the battery tray and other electrical components, but includes an opening for adjustable seat post 626. Detachable seat 624 is mounted on top of the seat post and provides a comfortable support surface for the user of the scooter when the scooter is in use.

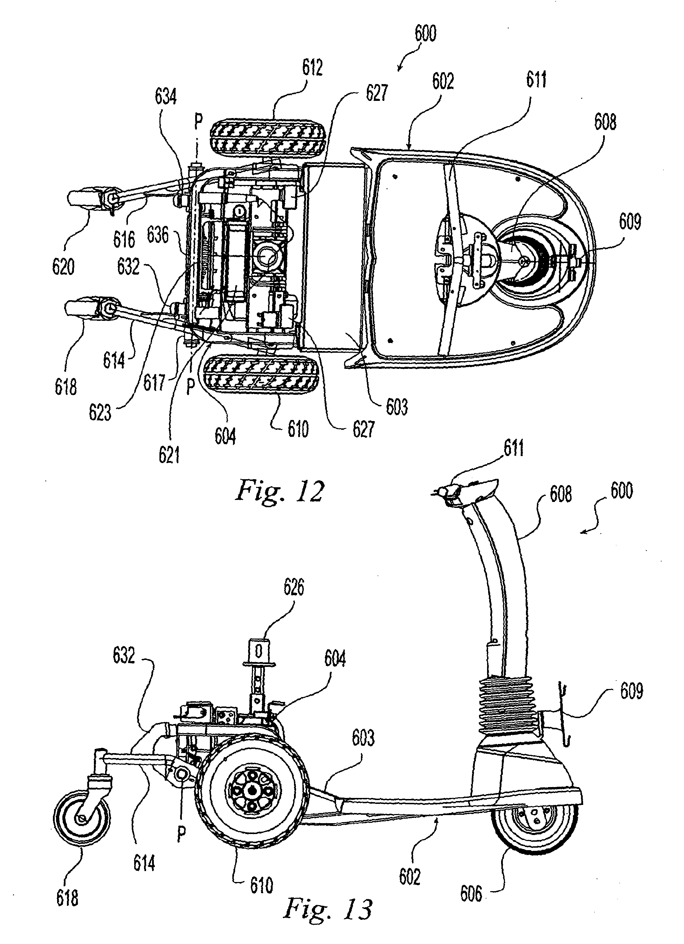

FIG. 12 provides a top view of scooter 600 with shroud 607 and seat 624 removed to expose the various electrical components of this embodiment. The portion of frame 604 that is located behind tray 603 is elevated above the portion of body 602 upon which the user rests his or her feet (see FIG. 13). This rear portion of the frame includes seat post 626 and a plurality of support brackets 627 for providing additional support and stability to seat 624. Also supported by this area of the frame are charger 621 and controller 623 which are in electrical communication with motor 622 and affect its function. When the scooter is assembled, motor 622 is situated directly beneath the seat as are mid-drive wheels 610 and 612.

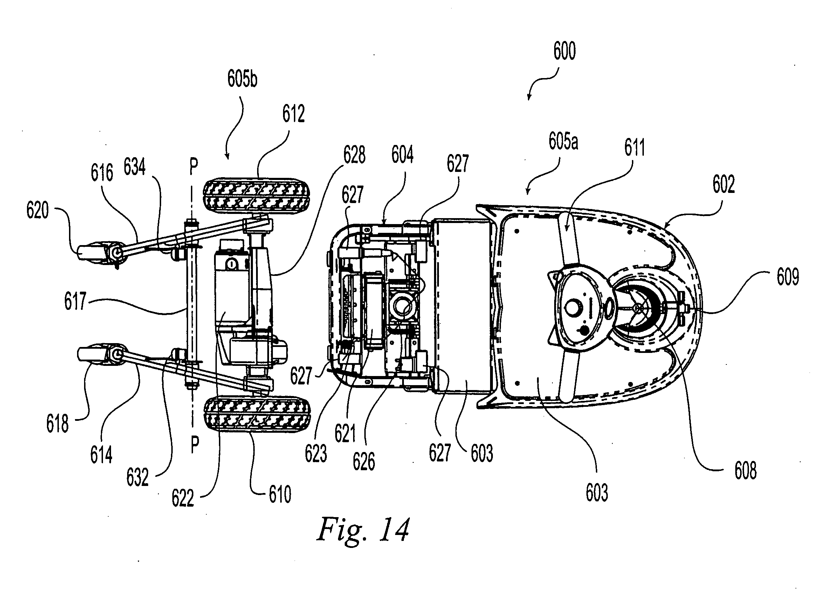

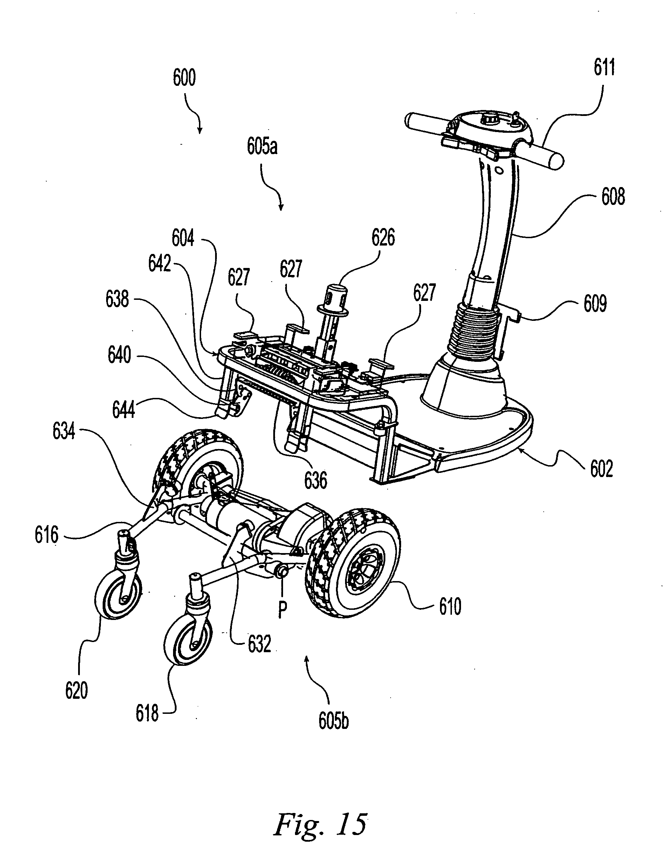

FIGS. 14 and 15 provide top and rear perspective views of scooter 600 in its disassembled state. In these Figures, the seat and shroud have been removed and front portion 605a has been separated from rear portion 605b. In this embodiment, rear portion 605b includes, in addition to the motor that powers the mid-drive wheels, pivot arms and casters that provide additional stability to the scooter. As best shown in FIG. 14, motor 622 in mounted on transaxle 628 and provides the means for propelling the scooter. Pivot arms 614 and 616 extend rearward and inward from the transaxle and terminate with casters 618 and 620 respectively. Pivot axle 617 extends transversely between the pivot arms midway between the drive wheels and the casters and is joined to each of the pivot arms at pivot joint P. In this embodiment, the pivot axle is not fixed to the pivot arms and is free to rotate around and within the pivot joint

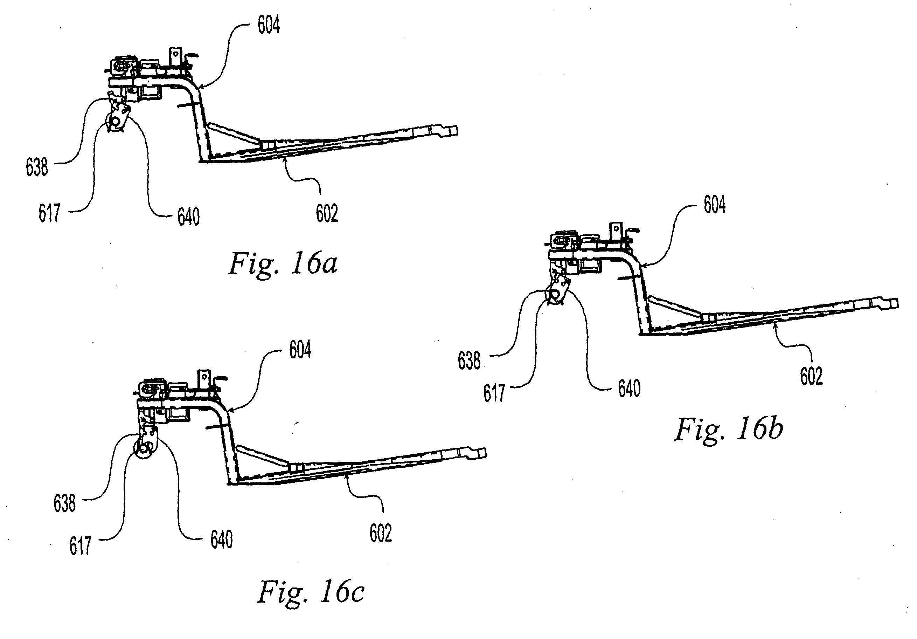

As best shown in FIG. 15, the primary means in this embodiment for attaching the front portion of the scooter to the rear portion is located on the underside of frame 604. A vertically oriented support arm 642 extends downward from both sides of the frame and terminates in a bracket 644 which allows the support arms to rest on, i.e., engage, pivot axle 617. The front portion of the scooter is secured or locked to the rear portion of the scooter by a releasable clasp system that comprises one, or preferably two, clasps 640 that are flexibly attached to the frame and that engage pivot axle 617. When bar 636 is depressed or in the downward or locked position, locking members 638, which are located on each side of bar 63 6 and are flexibly attached to the frame, engage clasps 640 and move them into the locked position (see FIG. 16a). When bar 636 is in its upward or released position, locking members 638 are disengaged from clasps 640, thereby releasing or unlocking the clasping members from the pivot axle 617 (see FIGS. 16b and 16c) and allowing the sections of the scooter to be separated from one another.

This embodiment of scooter 600 provides the user of the device with a simple means for breaking the scooter into several pieces for the purpose of transporting of the scooter in a vehicle. The assembled scooter may taken apart according to the following exemplary method; (i) remove the seat; (ii) remove the shroud; (iii) detach and remove the batteries; (iv) detach the electrical connections between the front and rear sections; (v) pull up on bar 636 to disengage the locking mechanism; (vi) lift the front portion of the scooter off of the rear portion; and (vii) fold steering column 608 downward and against body 602. Likewise, the disassembled scooter may be assembled according to the following exemplary method: (i) orient the front portion of the scooter above the rear portion such that the seat post is directly above the drive wheels and support arms 642 and brackets 644 are directly above pivot axle 617; (ii) gently lower or drop the top portion onto the bottom portion until the locking mechanism engages; (iii) raise the steering column to its upright position; (iv) reattach the electrical connections between the front and rear sections; (v) replace and reattach the batteries; (vi) replace the shroud; and (vii) secure seat 624 to post 626.

When the scooter is being assembled or re-assembled, it is important to correctly align the front portion of the scooter with the rear portion. In the exemplary embodiment shown in Figure 11-15, proper alignment is facilitated by a first guide or stop 632 and a second guide or stop 634, both of which are mounted on the top surface of the pivot arms (see Figures 14 and 15). In the exemplary embodiment, each of these stops includes a plastic or rubberized element attached to the portion of the stop that makes contact with the rear portion of frame 604. Generally speaking, stop 632 and 634 prevent front portion 605a from being placed too far toward casters 618 and 620 on rear portion 605b. Thus, in addition to adding overall stability and safety to the assembled scooter, stops 632 and 634 essentially provide a self-aligning means for properly connecting the front portion of the scooter to the rear portion of the scooter.

While the present invention has been illustrated by the description of embodiments thereof, and while the embodiments have been described in considerable detail, it is not the intention of the applicant to restrict or in any way limit the scope of the appended claims to such detail. Additional advantages and modifications will readily appear to those skilled in the art. For example, pivotal connections can be made of any number of structures including bearing assemblies, pins, nuts and bolts, and frictionless sleeve assemblies. Additionally, springs or shock absorbers can be added between pivoting and non-pivoting components to limit, dampen, or somewhat resist the pivotal motions of these components. Still additionally, skids or any suitable device with a curvilinear surface may be used in the place of wheels or casters. Moreover, the present invention may driven with via a front-wheel drive configuration wherein the front wheel is driven by a motor or motor and gearbox combination. Therefore, the invention, in its broader aspects, is not limited to the specific details, the representative apparatus, and illustrative examples shown and described. Accordingly, departures can be made from such details without departing from the spirit or scope of the applicant's general inventive concept.

## Claims

1. A portable motorized scooter, comprising:
(a) a front portion, wherein said front portion further comprises:
(i) a body;
(ii) a supportive frame surrounding said body; and
(iii) a releasable clasp system attached to said supportive frame; and
(b) a rear portion, wherein said rear portion is detachably connected to said front portion and further comprises:
(i) at least two drive wheels;
(ii) a transaxle interposed between said drive wheels;
(iii) at least two pivot arms attached to and extending rearward from said transaxle; and
(iv) a pivot axle interposed between said pivot arms, and wherein said pivot axle is adapted to receive said releasable clasp system for securing said front portion to said rear portion.

2. The scooter of claim 1, wherein said scooter is an electric scooter and further comprises a charger, a controller, and at least one power source mounted on said front portion, and an electric motor mounted on said rear portion, and wherein said charger, controller, and power source are in electrical communication with said motor, and wherein said motor provides power to said drive wheels for propelling said scooter.

3. The scooter of claim 1, wherein said scooter is adapted to be quickly assembled or dissembled, and wherein said scooter further comprises a guide system for properly positioning said front portion relative to said rear portion during assembly.

4. The scooter of claim 3, wherein said guide system for properly positioning said front portion relative to said rear portion during assembly further comprises at least one stop attached to at least one of said pivot arms.

5. The scooter of claim 1, wherein said front portion further comprises a wheel attached to said body for steering said scooter; a steering column connected to said wheel; and a steering means connected to said column for steering said scooter.

6. The scooter of claim 5, wherein said steering column further comprises a clip for supporting a basket or the like.

7. The scooter of claim 1, wherein said body further comprises a detachable shroud for partially covering said front portion.

8. The scooter of claim 1, wherein said supportive frame further includes an adjustable post adapted to receive a seat.

9. The scooter of claim 1, wherein said supportive frame further comprises at least two substantially vertical, downwardly extending support arms for supporting said front portion on said rear portion, and wherein said support arms each terminate with a bracket for engaging said pivot axle.

10. The scooter of claim 1, wherein said releasable clasp system further comprises:
(a) at least two clasping members flexibly attached to said frame for engaging said pivot axle;
(b) at least two locking members flexibly attached to said frame for engaging said clasping members; and
(c) a transverse bar connected to said locking members for controlling said locking members.

11. The scooter of claim 1, wherein said drive wheels are positioned midway along the length of said scooter.

12. The scooter of claim 1, wherein each of said pivot arms terminates in a caster.

13. The scooter of claim 12, wherein the distance between said drive wheels is greater than the distance between said casters.

14. A motorized scooter, comprising:
(a) a front portion, wherein said front portion further comprises:
(i) a body, and wherein said body further comprises at least one wheel attached to said body for steering said scooter; a steering column connected to said at least one wheel; and a steering means connected to said column for steering said scooter;
(ii) a supportive frame surrounding said body; and
(iii) a releasable clasping means attached to said supportive frame; and
(b) a rear portion, wherein said rear portion is detachably connected to said front portion and further comprises:
(i) at least two drive wheels;
(ii) a transaxle interposed between said drive wheels;
(iii) at least two pivot arms attached to and extending rearward from said transaxle; and
(iv) a pivot axle interposed between said pivot arms, and wherein said pivot axle is adapted to receive said releasable clasping means for securing said front portion to said rear portion.

15. The scooter of claim 14, wherein said scooter is an electric scooter and further comprises a charger, a controller, and at least one power source mounted on said front portion, and an electric motor mounted on said rear portion, and wherein said charger, controller, and power source are in electrical communication with said motor, and wherein said motor provides power to said drive wheels for propelling said scooter.

16. The scooter of claim 15, wherein said body is adapted to support said at least one power source.

17. The scooter of claim 15, wherein said power source is at least one battery.

18. The scooter of claim 14, wherein said scooter is adapted to be quickly assembled or dissembled, and wherein said scooter further comprises a guide system for properly positioning said front portion relative to said rear portion during assembly.

19. The scooter of claim 14, wherein said guide system for properly positioning said front portion relative to said rear portion during assembly further comprises at least one stop attached to at least one of said pivot arms.

20. The scooter of claim 14, wherein said releasable clasping means further comprises:
(a) at least two clasping members flexibly attached to said frame for engaging said pivot axle;
(b) at least two locking members flexibly attached to said frame for engaging said clasping members; and
(c) a transverse bar connected to said locking members for controlling said releasable clasping means.
